# EUROPEAN PATENT SPECIFICATION

(11) **EP 1 701 529 B1**
(45) Date of publication and mention of the grant of the patent: **17.02.2010**
(21) Application number: 05251485.8
(22) Date of filing: 11.03.2005
(51) Int. Cl.: H04M 3/54, H04M 1/725

(54) **Advanced call forwarding user interface for mobile communication device**
Verbesserte Anwenderschnittstelle zur Anrufumleitung für mobiles Kommunikationsgerät
Interface utilisateur de transfert d'appel avancée pour dispositif de communication mobile

(43) Date of publication of application: 13.09.2006
(73) Proprietor: Research In Motion Limited, Waterloo, Ontario N2L 3W8 (CA)
(72) Inventor: Vander Veen, Raymond, Waterloo, Ontario N2V 2M6 (CA)
(74) Representative: Roberts, Gwilym Vaughan

(56) References cited:
- US-A1- 2004 174 971
- US-A1- 2004 208 297
- US-A1- 2005 215 242

## Description

### BACKGROUND OF THE INVENTION

### 1. Technical Field

This invention generally relates to a call forwarding user interface in a mobile communication device capable of effecting a call forwarded communication connection with other communication devices over a communication network

### 2. Related Art

Many mobile communication devices already have call forwarding capability. Upon the occurrence a pre-defined call forwarding condition, an incoming call may be diverted or forwarded to a different communication device that has been previously identified by the user. Typically, the user interface employed for identifying the desired alternate destination telephone number or other identifying data has required the user to manually enter each digit of identifying data. If this can be done conveniently from memory or by reference to some written document, that may not present a great problem. However, if the desired alternate destination identifying data has not been memorized but, instead, is only available as some other pre-stored data within the communication device itself, then the process may become cumbersome. For example, the desired identifying data may have to be recalled for display on the device, copied onto paper or otherwise temporarily memorized by the user before it can be manually keyed in to identify the desired call forwarding destination. This can become particularly cumbersome if there are a number of different call forwarding conditions which may each be associated with a different call forwarding destination and/or if the user frequently desires to change call forwarding arrangements to meet different encountered situations.

Typically call forwarding is set up on mobile phones such that when the mobile user does not answer the phone, calls are forwarded to voice mail. Forwarding conditions for GSM phones are CFU (forward all incoming calls unconditionally), CFB (forward when busy), CFNRC (forward when not reachable), CFNRY (forward when no reply).

However, a mobile phone user may also want to forward calls to specific numbers, such as his/her home phone number, work phone number, cottage phone number, a friend's house, etc. For example, if the user is heading to a cottage and knows that there will be no cellular coverage there, he/she may want to forward all calls to the cottage land-line phone number.

Phone numbers such as those for a home, work, cottage, friend, etc. would typically already be contained in the user's address book in the mobile phone itself. However, in order to set CFU forwarding to the cottage number destination, the user must open the Cottage address book entry, copy or memorize the phone number, then open the call forwarding option, and set the CFU phone number by entering it manually.

US 2004/0208297 A1 (Valentine) discloses Call Handling Systems and Methods for handling telephone calls, particularly over wireless systems and US 2004/0174971 A-1 (Guan) discloses an Adjustable Profile Controlled and Individualized Call Management System relating to the subsequent handling of forwarded calls by means of Subscriber-individual, adjustable profiles .

A further example is US 2005/0215242 A1 (Black et al) Automatic Mobile Call forwarding with Time-Based Trigger Events.

### BRIEF SUMMARY

There is thus need for a more convenient way to access the address book directly from the call forwarding option so that it is easy for the user to forward calls to a number in the address book.

Furthermore, if a user wishes to change the forwarding settings regularly between, for example, default settings where unanswered calls are forwarded to voicemail, and a situation where all calls are forwarded to the "cottage", there is need for an easy way to save the required forwarding numbers and types into a "forwarding profile" or the like so that the user can easily toggle between the two setups. That is, if the user wants to change the forwarding numbers for CFB, CFNRC, and CRNRY from one number to another, he/she is currently required to re-enter or (reselect from a saved list) the forwarding numbers for each type. It would be easier if, once a series of forwarding numbers has been entered, that series could be saved into a "forwarding profile" so that in the future profile could be enabled, without requiring the user to re-enter or reselect each individual forwarding number.

To address various aspects of such typical problems, the exemplary embodiment of this invention provides various call forwarding user options in a mobile communication device capable of effecting a call forwarded communication connection with other communication devices over a communication network by use of identifying data associated with such devices.

In accordance with one aspect of the invention there is provided a method according to claim 1 of the appended claims. According to a second aspect of the invention, there is provided apparatus as defined in claim 8. According to a third aspect of the invention there is provided a digital storage medium as defined in claim 15.

For example, a communication device user may be provided with an option to define at least one call forwarding destination using identifying data internally stored in the data memory of the mobile communication device. Such option-selected identifying data may then be stored for future use in forwarding incoming calls to such at least one destination when a corresponding pre-defined call forwarding condition occurs.

For example, access may be provided to entries in an address book of previously stored identifying data for other user communication devices. Indeed, an option may be provided to define a call forwarding destination for each of plural pre-defined call forwarding conditions. For example, those plural pre-defined call forwarding conditions might include at least two selected from the group consisting of (a) call forwarding unconditional, (b) call forwarding when busy, (c) call forwarding when non-reachable, and (d) call forwarding when no reply.

The exemplary embodiment also provides an option to define at least one stored call forwarding profile including identifying data of a call forwarding destination for at least one corresponding pre-defined call forwarding condition. An option may also be provided then to selectively use at least one previously stored call forwarding profile. Indeed, an option may be provided to define a different name for each of plural stored profiles, each profile including a call forwarding destination for each of plural pre-defined call forwarding conditions. Such pre-defined call forwarding conditions may include at least some of those listed above.

The methodology of this invention may be embodied in apparatus and/or in a digital storage medium containing a computer program which, when executed, effects a call forwarding user interface of the type just described.

Access to the address book from the call forwarding option screen for individual forwarding types (CFU, CFB, CFNRC, CFNRY) can be provided instead of only allowing the user to enter a phone number manually. Suppose the user wants to forward all calls (CFU) to the phone number associated with a "Cottage" entry in the address book. The call forwarding option screen can provide a menu item to allow selection of a phone number form the address book, which will allow the user to select the cottage phone number.

A menu item in the call forwarding option screen such as "Create Profile", or "Save Profile" can be provided which would save the set of mappings between forwarding types and forwarding numbers to the device persistent data storage medium. For example, continuing with the cottage theme, the user may have set up CFU as follows:
Forward All Calls to: Cottage 16131234321

This setup may be saved to the device's persistent store by invoking the create profile menu item and naming it "cottage". In the future the user may want to switch to this profile. A list of profiles may be displayed and there may be a menu item provided so that the user can enable the selected profile in one step.

This invention may be embodied in hardware, software or a combination of hardware and software. The invention also provides a method for providing advanced call forwarding user interface options - especially useful in a mobile communication device. The exemplary embodiment is realized, at least in part, by executable computer program code which may be embodied in physical program memory media.

### BRIEF DESCRIPTION OF THE DRAWINGS

These and other objects and advantages of this invention will be better understood and appreciated in conjunction with the following detailed description of exemplary embodiments taken together with the accompanying drawings, of which:
FIG. 1 is an overall system wide schematic view of an exemplary communication system incorporating mobile communication devices with enhanced call forwarding capability in accordance with one exemplary embodiment of this invention;
FIG. **2** is an abbreviated schematic diagram of hardware included within an exemplary mobile communication device of FIG. **1****;**
FIGS. **3A-3C** provide an exemplary abbreviated schematic flow diagram of computer software (i.e., program logic) that may be utilized in the user's mobile communication device of FIG. **1****;** and
FIGS. **4-11** are exemplary abbreviated schematic depictions of user interface screen displays A-H that may be utilized in association with the program logic of FIGS. **3A-3C****.**

### DETAILED DESCRIPTION OF EXEMPLARY EMBODIMENTS

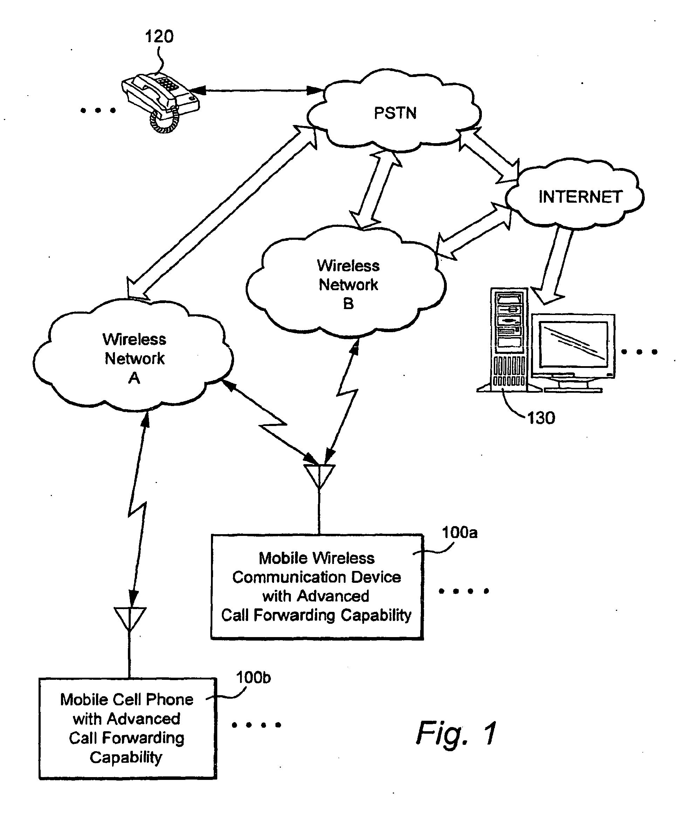

As those in the art will appreciate, modern communication systems may embody extremely complex diverse and widely scattered components, devices, networks and the like. A very simplified exemplary schematic depiction of one such arrangement is shown in FIG. **1****.** Here, mobile wireless communication devices **100a** (e.g., mobile cell phones **100b)** and the like make wireless connection with various wireless networks such as wireless network A and/or wireless network B. These wireless networks may, in turn, be connected via various gateways to a public switched telephone network (PSTN), each other, the Internet, etc. So called "land-line" relatively immobile telephones **120** may be connected to the various networks and may also have various degrees of sophistication including call forwarding capabilities. Various types of computers **130** may also be connected in various ways to such interconnected networks and they may also include call forwarding capabilities.

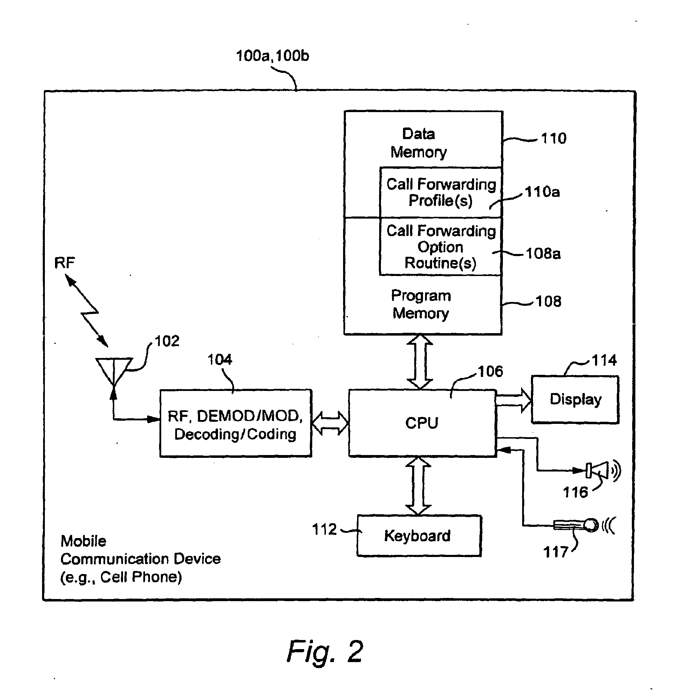

The exemplary embodiment of this invention is particularly concerned with advanced call forwarding user interface for mobile communication devices such as **100a, 100b** and the like. A very abbreviated and schematic depiction of circuitry typically found within such mobile communication devices is depicted at FIG. **2****.**

As depicted in FIG. **2****,** mobile communication device **100a, 100b** includes a suitable RF antenna **102** for wireless communication to/from wireless networks A and/or B. Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100a, 100b** may also typically include a main control CPU **106** which operates under control of a stored program in program memory **108** (and which has access to data memory **110).** CPU **106** also communicates with a conventional keyboard **112,** display **114** (e.g., an LCD) and audio transducers such as speaker **116** and microphone **117.** Suitable computer program executable code is stored in portions of program memory **108a** to provide an advanced call forwarding user interface. A portion of data memory **110a** may be used for storing one or more address books of user identifying data, call forwarding profiles and/or data for use in generating user interface screen displays.

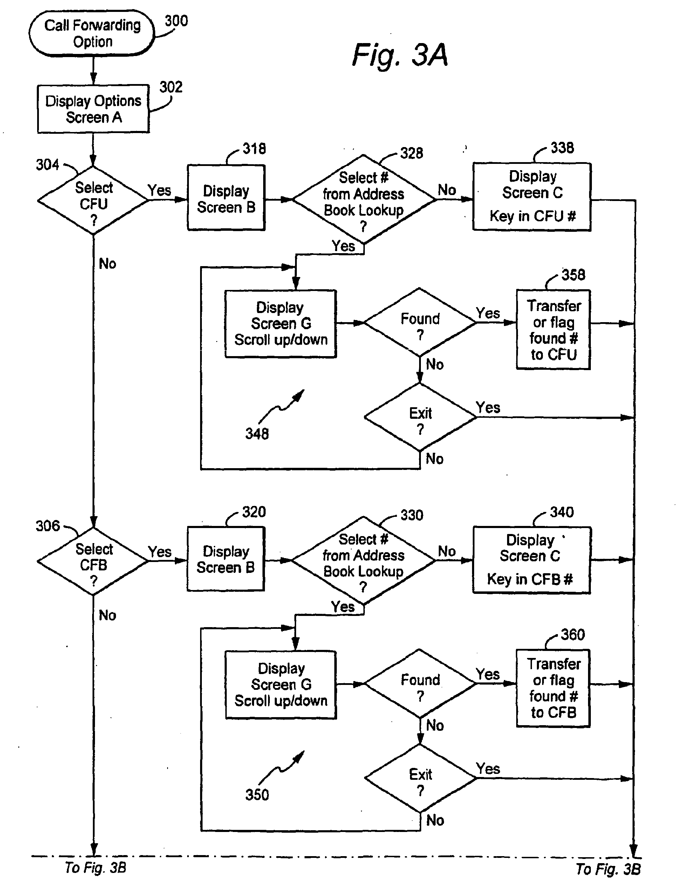

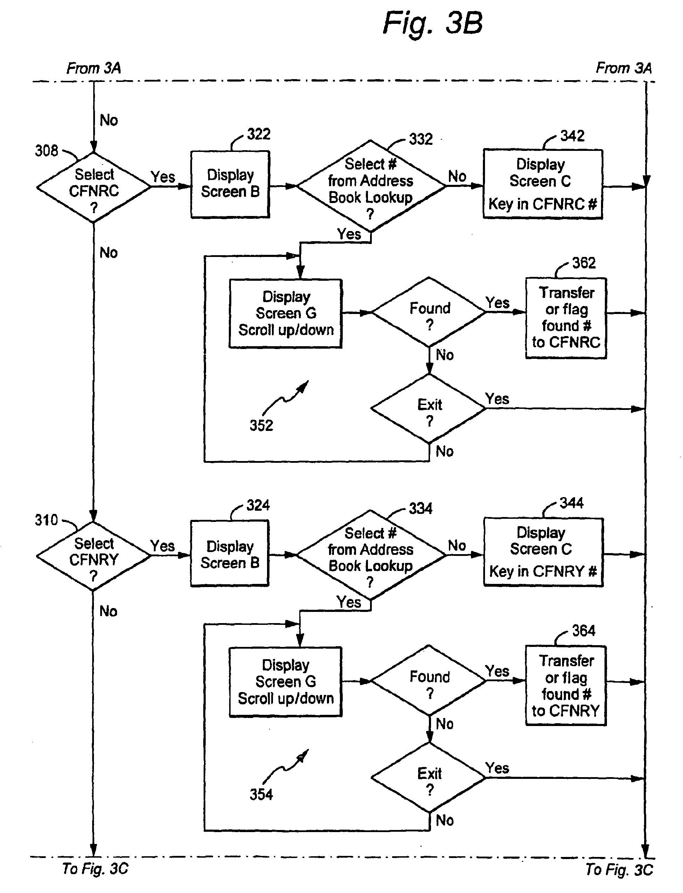

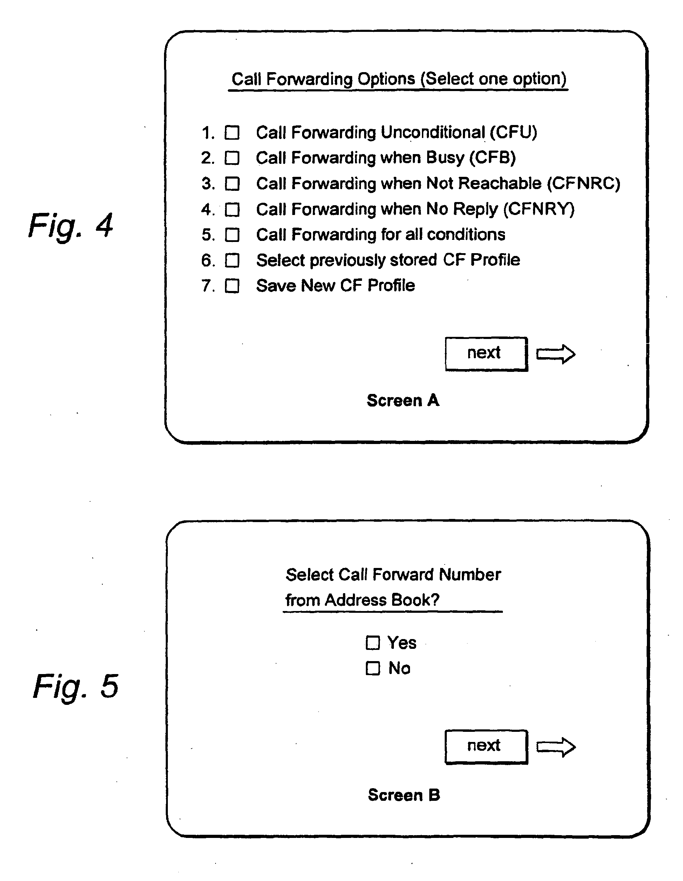

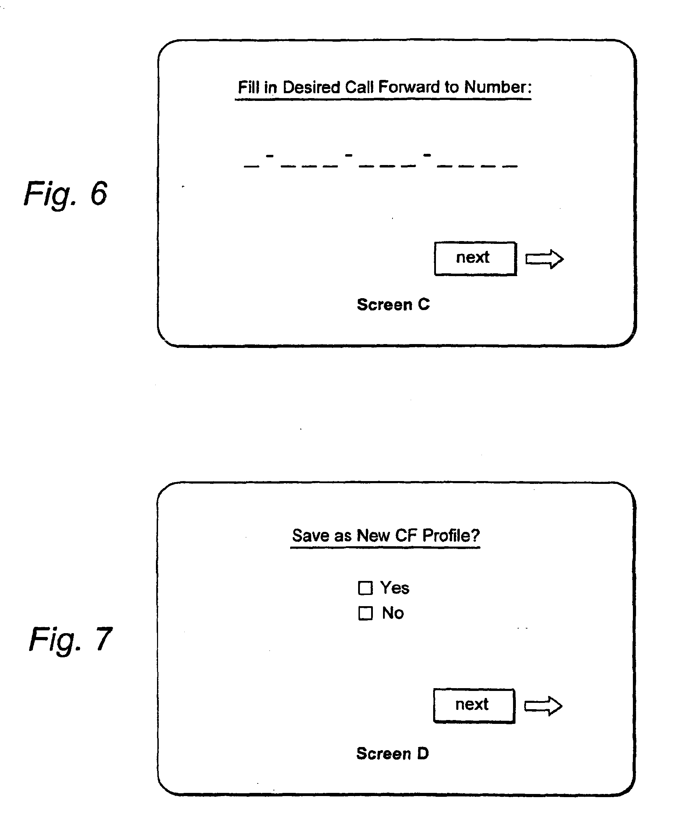

As depicted in FIGS. **3A-3C****,** upon entry to the call forwarding option program logic at **300,** an option screen A (FIG. **4****)** is displayed at **302.** As depicted in FIG. **4****,** this option screen permits the user to select one of several options before activating the "next" function. In the exemplary embodiment depicted here, seven different options are provided and once the user passes on to the next screen, tests are made respectively at **304, 306, 308, 310, 312, 314** and **316** in the program logic of FIGS. **3A-3C** so as to identify which option was selected by the user. The first five of those options, if selected, will then display screen B (FIG. **5****)** at blocks **318, 320, 322, 324** and **326** to give the user an option to select call forwarding identification data from a pre-stored address book. When the next screen of FIG. 5 is activated by the user, a test is made at **328, 330, 332, 334** and **336** to see whether the address book is to be consulted. If not, then screen C (FIG. **6****)** is displayed at **338, 340, 342, 344** and **346** to permit the user to manually key in the desired call forwarding destination identifying data which is then stored in association with the appropriate call forwarding condition (CFU; CFB; CFNRC; CFNRY; or a plurality of such conditions).

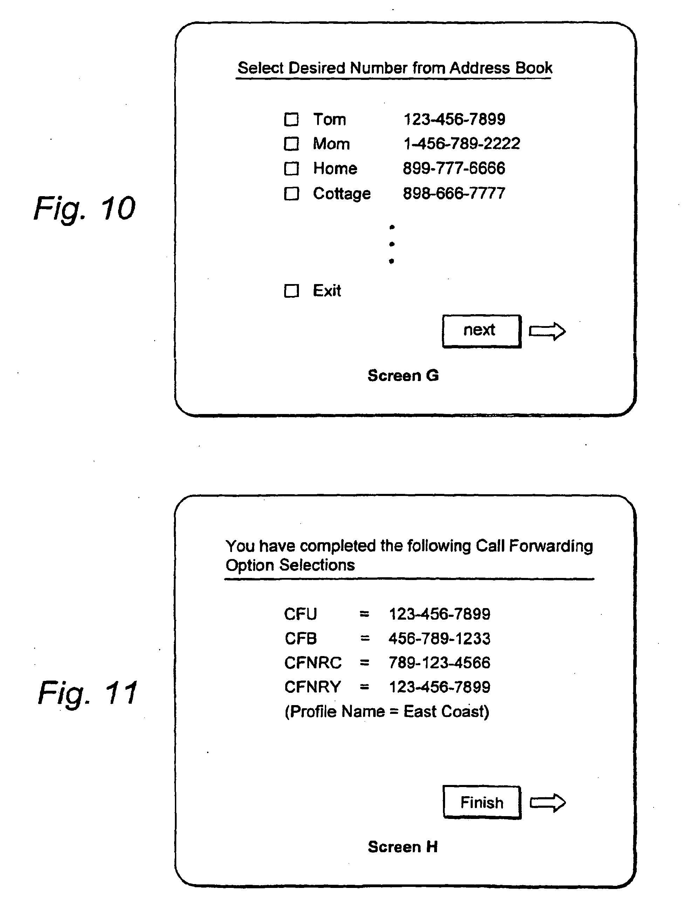

If address book access has been selected by the user, then screen G (FIG. **10****)** is displayed and conventional scroll up/down user selection functionality **348, 350, 352, 354** or **356** is executed resulting in the selected identifying data being transferred (or flagged) to an appropriate current use position in storage (e.g., associated with the appropriate call forwarding condition **358, 360, 362, 364** or **366** in FIGS. **3A-3C****.**

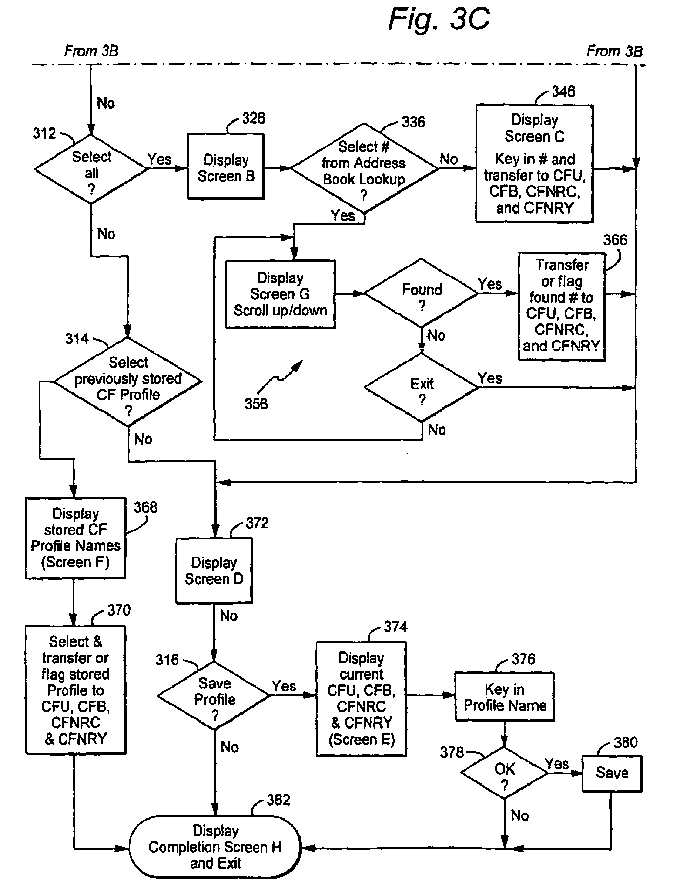

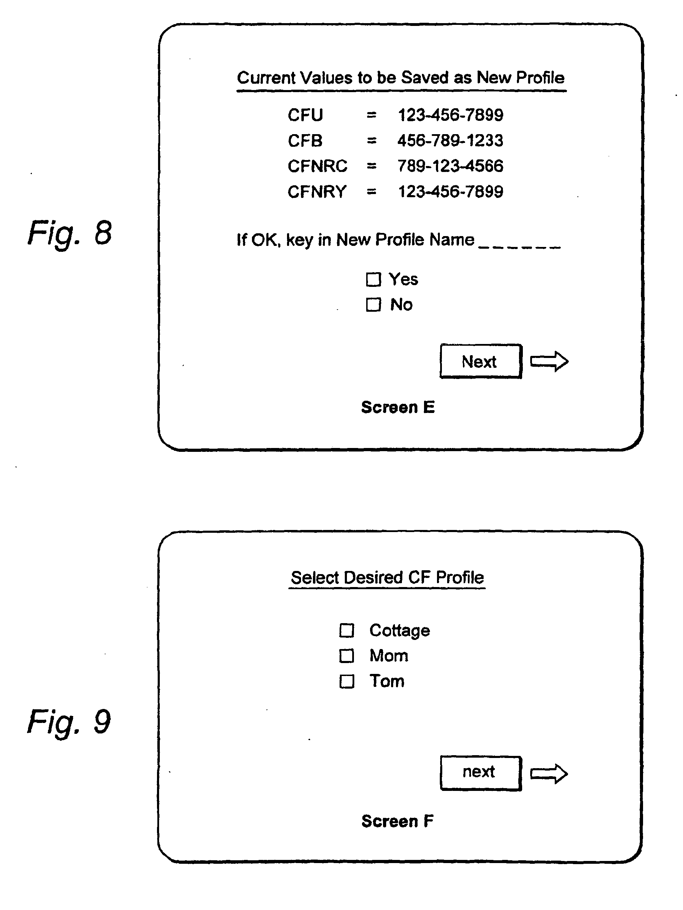

If the sixth option has been selected by user, then a branch will be taken from the program logic in FIG. **3C** as shown at **314** to block **368** where screen F (FIG. **9****)** is displayed so as to give the user an option to select and transfer (or flag) the appropriately pre-stored profile identifying data as depicted at **370.**

If the seventh option has been selected by the user in screen A, then the program logic will ultimately lead to block **372** in FIG. **3C** where screen D (FIG. **7****)** is displayed so as to give the user an option to save a new call forwarding profile. If this option is taken, then at block **374** screen E (FIG. **8**) is displayed so as to identify the values to be associated with each call forwarding condition and provide an opportunity to key in a desired new profile name at **376.** The user is also given an option at **378** to confirm that all of this data is correct and desired. If everything is as desired, then the new profile name and data is saved at **380** and, at a common exit point **382,** a final finish screen H (FIG. **11**) is shown to the user before exit is taken from the call forwarding option subroutine.

## Claims

1. A method for providing call forwarding user options in a mobile communication device (100a) capable of effecting a call forwarded communication connection with other communication devices (100b) over a communication network by use of identifying data associated with such devices, said method being **characterized by**:
providing a mobile communication device user option (300) at said mobile communication device (100a) to define at least one call forwarding destination;
receiving a selection of identifying data (328, 330, 332, 334, 336) internally stored in the data memory of the mobile communication device (100a); and
using (106) such option-selected identifying data in future forwarding of incoming calls to said at least one destination when a corresponding pre-defined call forwarding condition occurs.

2. A method as in claim 1 wherein said providing step comprises:
providing access (328, 330, 332, 334, 336) to entries in an address book of previously stored identifying data for other communication devices.

3. A method as in claim 1 wherein said providing step comprises:
providing an option to define a call forwarding destination for each of plural pre-defined call forwarding conditions (304, 306, 308, 310).

4. A method as in claim 3 wherein said plural pre-defined call forwarding conditions include at least two selected from the group consisting of: (a) call forwarding unconditional (304), (b) call forwarding when busy (306), (c) call forwarding when not reachable (308), and (d) call forwarding when no reply (310).

5. A method as in claim 1 wherein said providing step comprises:
providing an option to define at least one internally stored call forwarding profile (346, 372, 374) including identifying data for a call forwarding destination for at least one corresponding pre-defined call forwarding condition; and
providing an option to selectively use at least one previously stored call forwarding profile (314, 368, 370).

6. A method as in claim 5 wherein providing step comprises:
providing an option (374) to define a different name for each of plural stored profiles, including a call forwarding destination for each of plural pre-defined call forwarding conditions.

7. A method as in claim 6 wherein said plural pre-defined call forwarding conditions include at least two selected from the group consisting of (a) call forwarding unconditional (304), (b) call forwarding when busy (306), (c) call forwarding when not reachable (308), and (d) call forwarding when no reply (310).

8. Apparatus for providing call forwarding options in a mobile communication device (100a) capable of effecting a call forwarded communication connection with other communication devices (100b) over a communication network by use of identifying data associated with such devices, said apparatus being **characterized by**:
means for providing a mobile communication device user option (300) to define at least one call forwarding destination;
means for receiving a selection of identifying data (328, 330, 332, 334, 336) internally stored in the data memory of the mobile communication device (100a); and
means (106) for using such option-selected identifying data in future forwarding of incoming calls to said at least one destination when a corresponding pre-defined call forwarding condition occurs.

9. Apparatus as in claim 8 wherein said means for providing comprises:
means for providing access (328, 330, 332, 334, 336) to entries in an address book of previously stored identifying data for other communication devices.

10. Apparatus as in claim 8 wherein said means for providing comprises:
means for providing an option to define a call forwarding destination for each of plural pre-defined call forwarding conditions (304, 306, 308, 310).

11. Apparatus as in claim 10 wherein said plural pre-defined call forwarding conditions include at least two selected from the group consisting of: (a) call forwarding unconditional (304), (b) call forwarding when busy (306), (c) call forwarding when not reachable (308), and (d) call forwarding when no reply (310).

12. Apparatus as in claim 8 wherein said means for providing comprising:
means (346, 372, 274) for providing an option to define at least one internally stored call forwarding profile including identifying data for a call forwarding destination for at least one corresponding pre-defined call forwarding condition; and
means (314, 368, 370) for providing an option to selectively use at least one previously stored call forwarding profile.

13. Apparatus as in claim 12 wherein means for providing comprises:
means (374) for providing an option to define a different name for each of plural stored profiles, including a call forwarding destination for each of plural pre-defined call forwarding conditions.

14. Apparatus as in claim 13 wherein said plural pre-defined call forwarding conditions include at least two selected from the group consisting of (a) call forwarding unconditional (304), (b) call forwarding when busy (306), (c) call forwarding when not reachable (308), and (d) call forwarding when no reply (310).

15. A digital storage medium (108a) containing a computer program which, when executed, provides call forwarding user options in a mobile communication device (100a) capable of effecting a call forwarded communication connection with other communication devices (100b) over a communication network by use of identifying data associated with such devices, wherein execution of said program is **characterized by**:
providing communication device user option (300) to define at least one call forwarding destination;
receiving a selection of identifying data (328, 330, 332, 334, 336) internally stored in the data memory of the mobile communication device (100a); and
using (106) such option-selected identifying data in future forwarding of incoming calls to said at least one destination when a corresponding pre-defined call forwarding condition occurs.

16. A digital storage medium as in claim 15 wherein execution of said program:
provides access to entries in an address book of previously stored identifying data for other communication devices.

17. A digital storage medium as in claim 15 wherein execution of said program:
provides an option to define a call forwarding destination for each of plural pre-defined call forwarding conditions (304, 306, 308, 310).

18. A digital storage medium as in claim 17 wherein said plural pre-defined call forwarding conditions include at least two selected from the group consisting of (a) call forwarding unconditional (304, (b) call forwarding when busy (306), (c) call forwarding when not reachable (308), and (d) call forwarding when no reply (310).

19. A digital storage medium as in claim 15 wherein execution of said program:
provides an option to define at least internally stored call forwarding profile (346, 372, 374) including identifying data for a call forwarding destination for at least one corresponding pre-defmed call forwarding condition; and
provides an option to selectively use at least one previously stored call forwarding profile.

20. A digital storage medium as in claim 19 wherein execution of said program:
provides an option (374) to define a different name for each of plural stored profiles, each profile including a call forwarding destination for each of plural pre-defined call forwarding conditions.

21. A digital storage medium as in claim 20 wherein said plural pre-defmed call forwarding conditions include at least two selected from the group consisting of (a) call forwarding unconditional (304), (b) call forwarding when busy (306), (c) call forwarding when not reachable (308), and (d) call forwarding when no reply (310).

## Patentansprüche

1. Verfahren zum Vorsehen von Anrufweiterleitungs-Benutzeroptionen in einer mobilen Kommunikationsvorrichtung (100a), die eine Anrufweiterleitungs-Kommunikationsverbindung mit anderen Kommunikationsvorrichtungen (100b) über ein Kommunikationsnetzwerk bewirken können durch Verwendung von Identifizierungsdaten, die zu derartigen Vorrichtungen gehören, wobei das Verfahren **gekennzeichnet ist durch**:
Vorsehen einer Benutzer-Option (300) an der mobilen Kommunikationsvorrichtung (100a), um mindestens ein Anrufweiterleitungsziel zu definieren; Empfangen einer Auswahl von Identifizierungsdaten (328, 330, 332, 334, 336), die intern in dem Datenspeicher der mobilen Kommunikationsvorrichtung (100a) gespeichert sind; und
Verwenden (106) derartiger Options-ausgewählter Identifizierungsdaten bei einem zukünftigen Weiterleiten von ankommenden Anrufen an das zumindest eine Ziel, wenn eine entsprechende vordefinierte Anrufweiterleitungsbedingung auftritt.

2. Verfahren gemäß Anspruch 1, wobei der Schritt des Vorsehens aufweist:
Vorsehen eines Zugriffs (328, 330, 332, 334, 336) auf Einträge in einem Adressbuch von früher gespeicherten Identifizierungsdaten für andere Kommunikationsvorrichtungen.

3. Verfahren gemäß Anspruch 1, wobei der Schritt des Vorsehens aufweist:
Vorsehen einer Option, um ein Anrufweiterleitungsziel für jede einer Vielzahl von vordefinierten Anrufweiterleitungsbedingungen (304, 306, 308, 310) zu definieren.

4. Verfahren gemäß Anspruch 3, wobei die Vielzahl von vordefinierten Anrufweiterleitungsbedingungen zumindest zwei umfasst, die aus einer Gruppe ausgewählt sind, die besteht aus: (a) Anrufweiterleitung bedingungslos (304), (b) Anrufweiterleitung, wenn besetzt (306), (c) Anrufweiterleitung, wenn nicht erreichbar (308), und (d) Anrufweiterleitung, wenn keine Antwort (310).

5. Verfahren gemäß Anspruch 1, wobei der Schritt des Vorsehens aufweist:
Vorsehen einer Option, um zumindest ein intern gespeichertes Anrufweiterleitungsprofil (346, 372, 374) zu definieren, einschließlich Identifizierungsdaten für ein Anrufweiterleitungsziel für zumindest eine entsprechende vordefinierte Anrufweiterleitungsbedingung; und
Vorsehen einer Option, selektiv zumindest ein früher gespeichertes Anrufweiterleitungsprofil (314, 368, 370) zu verwenden.

6. Verfahren gemäß Anspruch 5, wobei der Schritt des Vorsehens aufweist:
Vorsehen einer Option (374), einen anderen Namen für jedes einer Vielzahl von gespeicherten Profilen zu definieren, einschließlich eines Anrufweiterleitungsziels für jede einer Vielzahl von vordefinierten Anrufweiterleitungsbedingungen.

7. Verfahren gemäß Anspruch 6, wobei die Vielzahl von vordefinierten Anrufweiterleitungsbedingungen zumindest zwei umfasst, die aus der Gruppe ausgewählt sind, die besteht aus: (a) Anrufweiterleitung bedingungslos (304), (b) Anrufweiterleitung, wenn besetzt (306), (c) Anrufweiterleitung, wenn nicht erreichbar (308), und (d) Anrufweiterleitung, wenn keine Antwort (310).

8. Vorrichtung zum Vorsehen von Anrufweiterleitungs-Optionen in einer mobilen Kommunikationsvorrichtung (100a), die eine Anrufweiterleitungs-Kommunikationsverbindung mit anderen Kommunikationsvorrichtungen (100b) über ein Kommunikationsnetzwerk bewirken können durch Verwendung von Identifizierungsdaten, die zu derartigen Vorrichtungen gehören, wobei die Vorrichtung **gekennzeichnet ist durch**:
Mittel zum Vorsehen einer Benutzer-Option (300) an der mobilen Kommunikationsvorrichtung, um mindestens ein Anrufweiterleitungsziel zu definieren; Mittel zum Empfangen einer Auswahl von Identifizierungsdaten (328, 330, 332, 334, 336), die intern in dem Datenspeicher der mobilen Kommunikationsvorrichtung (100a) gespeichert sind; und
Mittel (106) zum Verwenden derartiger Options-ausgewählter Identifizierungsdaten bei einem zukünftigen Weiterleiten von ankommenden Anrufen an das zumindest eine Ziel, wenn eine entsprechende vordefinierte Anrufweiterleitungsbedingung auftritt.

9. Vorrichtung gemäß Anspruch 8, wobei das Mittel zum Vorsehen aufweist:
Mittel zum Vorsehen eines Zugriffs (328, 330, 332, 334, 336) auf Einträge in einem Adressbuch von früher gespeicherten Identifizierungsdaten für andere Kommunikationsvorrichtungen.

10. Vorrichtung gemäß Anspruch 8, wobei das Mittel zum Vorsehen aufweist:
Mittel zum Vorsehen einer Option, um ein Anrufweiterleitungsziel für jede einer Vielzahl von vordefinierten Anrufweiterleitungsbedingungen (304, 306, 308, 310) zu definieren.

11. Vorrichtung gemäß Anspruch 10, wobei die Vielzahl von vordefinierten Anrufweiterleitungsbedingungen zumindest zwei umfasst, die aus der Gruppe ausgewählt sind, die besteht aus: (a) Anrufweiterleitung bedingungslos (304), (b) Anrufweiterleitung, wenn besetzt (306), (c) Anrufweiterleitung, wenn nicht erreichbar (308), und (d) Anrufweiterleitung, wenn keine Antwort (310).

12. Vorrichtung gemäß Anspruch 8, wobei das Mittel zum Vorsehen aufweist:
Mittel (346, 372, 374) zum Vorsehen einer Option, um zumindest ein intern gespeichertes Anrufweiterleitungsprofil zu definieren, einschließlich Identifizierungsdaten für ein Anrufweiterleitungsziel für zumindest eine entsprechende vordefinierte Anrufweiterleitungsbedingung; und
Mittel (314, 368, 370) zum Vorsehen einer Option, selektiv zumindest ein früher gespeichertes Anrufweiterleitungsprofil zu verwenden.

13. Vorrichtung gemäß Anspruch 12, wobei das Mittel zum Vorsehen aufweist:
Mittel (374) zum Vorsehen einer Option, einen anderen Namen für jedes einer Vielzahl von gespeicherten Profilen zu definieren, einschließlich eines Anrufweiterleitungsziels für jede einer Vielzahl von vordefinierten Anrufweiterleitungsbedingungen.

14. Vorrichtung gemäß Anspruch 13, wobei die Vielzahl von vordefinierten Anrufweiterleitungsbedingungen zumindest zwei umfasst, die aus der Gruppe ausgewählt sind, die besteht aus: (a) Anrufweiterleitung bedingungslos (304), (b) Anrufweiterleitung, wenn besetzt (306), (c) Anrufweiterleitung, wenn nicht erreichbar (308), und (d) Anrufweiterleitung, wenn keine Antwort (310).

15. Digitales Speichermedium (108a), das ein Computerprogramm enthält, das bei Ausführung Anrufweiterleitungsbenutzeroptionen in einer mobilen Kommunikationsvorrichtung (100a) vorsieht, die eine Anrufweiterleitungs-Kommunikationsverbindung mit anderen Kommunikationsvorrichtungen (100b) über ein Kommunikationsnetzwerk bewirken können durch Verwendung von Identifizierungsdaten, die zu derartigen Vorrichtungen gehören, wobei die Ausführung des Programms **gekennzeichnet ist durch**:
Vorsehen einer Benutzer-Option (300) an der Kommunikationsvorrichtung , um mindestens ein Anrufweiterleitungsziel zu definieren; Empfangen einer Auswahl von Identifizierungsdaten (328, 330, 332, 334, 336), die intern in dem Datenspeicher der mobilen Kommunikationsvorrichtung (100a) gespeichert sind; und
Verwenden (106) derartiger Options-ausgewählter Identifizierungsdaten bei einem zukünftigen Weiterleiten von ankommenden Anrufen an das zumindest eine Ziel, wenn eine entsprechende vordefinierte Anrufweiterleitungsbedingung auftritt.

16. Digitales Speichermedium gemäß Anspruch 15, wobei die Ausführung des Programms:
einen Zugriff auf Einträge in einem Adressbuch von früher gespeicherten Identifizierungsdaten für andere Kommunikationsvorrichtungen vorsieht.

17. Digitales Speichermedium gemäß Anspruch 15, wobei die Ausführung des Programms:
eine Option vorsieht, um ein Anrufweiterleitungsziel für jede einer Vielzahl von vordefinierten Anrufweiterleitungsbedingungen (304, 306, 308, 310) zu definieren.

18. Digitales Speichermedium gemäß Anspruch 17, wobei die Vielzahl von vordefinierten Anrufweiterleitungsbedingungen zumindest zwei umfasst, die aus einer Gruppe ausgewählt sind, die besteht aus: (a) Anrufweiterleitung bedingungslos (304), (b) Anrufweiterleitung, wenn besetzt (306), (c) Anrufweiterleitung, wenn nicht erreichbar (308), und (d) Anrufweiterleitung, wenn keine Antwort (310).

19. Digitales Speichermedium gemäß Anspruch 15, wobei die Ausführung des Programms:
eine Option vorsieht, um zumindest ein intern gespeichertes Anrufweiterleitungsprofil (346, 372, 374) zu definieren, einschließlich Identifizierungsdaten für ein Anrufweiterleitungsziel für zumindest eine entsprechende vordefinierte Anrufweiterleitungsbedingung; und
eine Option vorsieht, selektiv zumindest ein früher gespeichertes Anrufweiterleitungsprofil zu verwenden.

20. Digitales Speichermedium gemäß Anspruch 19, wobei die Ausführung des Programms:
eine Option (374) vorsieht, einen anderen Namen für jedes einer Vielzahl von gespeicherten Profilen zu definieren, wobei jedes Profil ein Anrufweiterleitungsziel für jede einer Vielzahl von vordefinierten Anrufweiterleitungsbedingungen umfasst.

21. Digitales Speichermedium gemäß Anspruch 20, wobei die Vielzahl von vordefinierten Anrufweiterleitungsbedingungen zumindest zwei umfasst, die aus der Gruppe ausgewählt sind, die besteht aus: (a) Anrufweiterleitung bedingungslos (304), (b) Anrufweiterleitung, wenn besetzt (306), (c) Anrufweiterleitung, wenn nicht erreichbar (308), und (d) Anrufweiterleitung, wenn keine Antwort (310).

## Revendications

1. Procédé destiné à fournir des options à un utilisateur pour le transfert d'appel sur un dispositif de communication mobile (100a) capable d'effectuer une connexion de communication d'un appel transféré avec d'autres dispositifs de communication (100b) sur un réseau de communication en utilisant des données d'identification associées à ces dispositifs, ledit procédé étant **caractérisé par** les étapes consistant à :
fournir à un utilisateur de dispositif de communication mobile une option (300) sur ledit dispositif de communication mobile (100a) pour définir au moins une destination de transfert d'appel ;
recevoir une sélection de données d'identification (328, 330, 332, 334, 336) mémorisées intérieurement dans la mémoire de données du dispositif de communication mobile (100a) ; et
utiliser (106) ces données d'identification sélectionnées optionnellement pour le transfert futur des appels entrants vers ladite au moins une destination, lorsqu'une condition prédéfinie de transfert d'appel est réunie.

2. Procédé selon la revendication 1, dans lequel ladite étape de fourniture comprend l'étape consistant à :
fournir un accès (328, 330, 332, 334, 336) à des rubriques d'un carnet d'adresses constituées de données d'identification d'autres dispositifs de communication, préalablement mémorisées.

3. Procédé selon la revendication 1, dans lequel ladite étape de fourniture comprend l'étape consistant à :
fournir une option de définition d'une destination de transfert d'appel pour chaque condition parmi une pluralité de conditions prédéfinies de transfert d'appel (304, 306, 308, 310).

4. Procédé selon la revendication 3, dans lequel ladite pluralité de conditions prédéfinies de transfert d'appel comprend au moins deux conditions sélectionnées dans le groupe composé de : (a) transfert d'appel inconditionnel (304), (b) transfert d'appel si occupé (306), (c) transfert d'appel si injoignable (308) et (d) transfert d'appel en l'absence de réponse (310).

5. Procédé selon la revendication 1, dans lequel ladite étape de fourniture comprend l'étape consistant à :
fournir une option de définition d'au moins un profil de transfert d'appel (346, 372, 374), mémorisé intérieurement, contenant des données d'identification pour une destination de transfert d'appel, pour au moins une condition prédéfinie de transfert d'appel qui correspond ; et
fournir une option d'utilisation sélective d'au moins un profil de transfert d'appel (314, 368, 370) mémorisé antérieurement.

6. Procédé selon la revendication 5, dans lequel l'étape de fourniture comprend l'étape consistant à :
fournir une option (374) de définition d'un nom différent pour chaque profil dans la pluralité de profils mémorisés contenant des données d'identification pour une destination de transfert d'appel, pour chaque condition parmi la pluralité de conditions prédéfinies de transfert d'appel.

7. Procédé selon la revendication 6, dans lequel ladite pluralité de conditions prédéfinies de transfert d'appel comprend au moins deux conditions sélectionnées dans le groupe composé due : (a) transfert d'appel inconditionnel (304), (b) transfert d'appel si occupé (306), (c) transfert d'appel si injoignable (308) et (d) transfert d'appel en l'absence de réponse (310).

8. Appareil destiné à fournir des options de transfert d'appel sur un dispositif de communication mobile (100a) capable d'effectuer une connexion de communication d'un appel transféré avec d'autres dispositifs de communication (100b) sur un réseau de communication en utilisant des données d'identification associées à ces dispositifs, ledit appareil étant **caractérisé par** :
un moyen destiné à fournir à un utilisateur de dispositif de communication mobile une option (300) de définition d'au moins une destination de transfert d'appel ;
un moyen de recevoir une sélection de données d'identification (328, 330, 332, 334, 336) mémorisées intérieurement dans la mémoire de données du dispositif de communication mobile (100a) ; et
un moyen (106) destiné à utiliser ces données d'identification sélectionnées optionnellement pour le transfert futur des appels entrants vers ladite au moins une destination, lorsqu'une condition prédéfinie de transfert d'appel est réunie.

9. Appareil selon la revendication 8, dans lequel ledit moyen de fourniture comprend :
un moyen destiné à fournir un accès (328, 330, 332, 334, 336) à des rubriques d'un carnet d'adresses constituées de données d'identification d'autres dispositifs de communication, préalablement mémorisées.

10. Appareil selon la revendication 8, dans lequel ledit moyen de fourniture comprend :
un moyen destiné à fournir une option de définition d'une destination de transfert d'appel pour chaque condition parmi une pluralité de conditions prédéfinies de transfert d'appel (304, 306, 308, 310).

11. Appareil selon la revendication 10, dans lequel ladite pluralité de conditions prédéfinies de transfert d'appel comprend au moins deux conditions sélectionnées dans le groupe composé due : (a) transfert d'appel inconditionnel (304), (b) transfert d'appel si occupé (306), (c) transfert d'appel si injoignable (308) et (d) transfert d'appel en l'absence de réponse (310).

12. Appareil selon la revendication 8, dans lequel ledit moyen de fourniture comprend :
un moyen (346, 372, 274) destiné à fournir une option de définition d'au moins un profil de transfert d'appel mémorisé intérieurement, contenant des données d'identification pour une destination de transfert d'appel, pour au moins une condition prédéfinie de transfert d'appel qui correspond ; et
un moyen (314, 368, 370) destiné à fournir une option d'utilisation sélective d'au moins un profil de transfert d'appel mémorisé antérieurement.

13. Appareil selon la revendication 12, dans lequel le moyen de fourniture comprend :
un moyen (374) destiné à fournir une option de définition d'un nom différent pour chaque profil dans la pluralité de profils mémorisés contenant des données d'identification pour une destination de transfert d'appel, pour chaque condition parmi la pluralité de conditions prédéfinies de transfert d'appel.

14. Appareil selon la revendication 13, dans lequel ladite pluralité de conditions prédéfinies de transfert d'appel comprend au moins deux conditions sélectionnées dans le groupe composé de : (a) transfert d'appel inconditionnel (304), (b) transfert d'appel si occupé (306), (c) transfert d'appel si injoignable (308) et (d) transfert d'appel en l'absence de réponse (310).

15. Support de stockage numérique (108a) contenant un programme informatique qui, lorsqu'il est exécuté, fournit des options à un utilisateur pour le transfert d'appel sur un dispositif de communication mobile (100a) capable d'effectuer une connexion de communication d'un appel transféré avec d'autres dispositifs de communication (100b) sur un réseau de communication en utilisant des données d'identification associées à ces dispositifs, l'exécution dudit programme étant **caractérisé par** les étapes consistant à :
fournir à un utilisateur de dispositif de communication mobile une option (300) de définition d'au moins une destination de transfert d'appel ;
recevoir une sélection de données d'identification (328, 330, 332, 334, 336) mémorisées intérieurement dans la mémoire de données du dispositif de communication mobile (100a) ; et
utiliser (106) ces données d'identification sélectionnées optionnellement pour le transfert futur des appels entrants vers ladite au moins une destination, lorsqu'une condition prédéfinie de transfert d'appel est réunie.

16. Support de stockage numérique selon la revendication 15, dans lequel l'exécution dudit programme :
fournit un accès à des rubriques d'un carnet d'adresses constituées de données d'identification préalablement mémorisées d'autres dispositifs de communication.

17. Support de stockage numérique selon la revendication 15, dans lequel l'exécution dudit programme :
fournit une option de définition d'une destination de transfert d'appel pour chaque condition parmi une pluralité de conditions prédéfinies de transfert d'appel (304, 306, 308, 310).

18. Support de stockage numérique selon la revendication 17, dans lequel ladite pluralité de conditions prédéfinies de transfert d'appel comprend au moins deux conditions sélectionnées dans le groupe composé due : (a) transfert d'appel inconditionnel (304), (b) transfert d'appel si occupé (306), (c) transfert d'appel si injoignable (308) et (d) transfert d'appel en l'absence de réponse (310).

19. Support de stockage numérique selon la revendication 15, dans lequel l'exécution dudit programme :
fournit une option de définition d'au moins un profil de transfert d'appel (346, 372, 374), mémorisé intérieurement, contenant des données d'identification pour une destination de transfert d'appel, pour au moins une condition prédéfinie de transfert d'appel qui correspond ; et
fournit une option d'utilisation sélective d'au moins un profil de transfert d'appel mémorisé antérieurement.

20. Support de stockage numérique selon la revendication 19, dans lequel l'exécution dudit programme :
fournit une option (374) de définition d'un nom différent pour chaque profil dans la pluralité de profils mémorisés contenant des données d'identification pour une destination de transfert d'appel, pour chaque condition parmi la pluralité de conditions prédéfinies de transfert d'appel.

21. Support de stockage numérique selon la revendication 20, dans lequel ladite pluralité de conditions prédéfinies de transfert d'appel comprend au moins deux conditions sélectionnées dans le groupe composé due : (a) transfert d'appel inconditionnel (304), (b) transfert d'appel si occupé (306), (c) transfert d'appel si injoignable (308) et (d) transfert d'appel en l'absence de réponse (310).
